# EUROPEAN PATENT SPECIFICATION

(11) **EP 0 802 719 B1**
(45) Date of publication and mention of the grant of the patent: **07.04.1999**
(21) Application number: 96902005.6
(22) Date of filing: 09.01.1996
(51) Int. Cl.: A01G 9/10

(54) **METHOD, DEVICE AND SET OF SEVERAL HOLLOW BODIES FOR EXTRACTING A PLUG OUT OF A HOLLOW BODY**
VERFAHREN, VORRICHTUNG UND BEHÄLTERSATZ, UM EINE ERD-SCHOLLE AUS EINEM BEHÄLTER ZU ZIEHEN
PROCEDE, DISPOSITIF ET ENSEMBLE DE PLUSIEURS CORPS CREUX POUR L'EXTRACTION D'UNE MOTTE D'UN CORPS CREUX

(30) Priority: 10.01.1995 EP 95870001
(43) Date of publication of application: 29.10.1997
(73) Proprietor: Synbra B.V., 6603 BM Wijchen (NL)
(72) Inventor: VISSER, Cees, F., T., NL-3295 GN 'S-Gravendeel (NL)
(74) Representative: Fieret, Johannes, Ir.
(86) International application number: NL9600016
(87) International publication number: WO9621346

(56) References cited:
- EP-A- 0 323 674
- EP-A- 0 422 704
- DE-C- 547 677
- NL-A- 9 000 803
- NL-A- 9 201 107

## Description

This invention relates to a method for extracting a plug, having a plant cultivated therein, out of a hollow body, which hollow body shows an open end and at the other end an opening through which an ejecting pin can push said plug the hollow body.

When cultivating seedlings or cuttings use is made on a large scale of hollow bodies arranged in the shape of blocks or sheets and comprising an amount of seedling or cutting soil.

Depending on the plant species, roots are developed more or less quickly forming a plug together with the soil.

Removing the plugs out of these holders or hollow bodies together with plants cultivated therein is more and more performed through mechanical means. The plug is pushed hereby out of the hollow body by means of a pushing bar and the plug is protected against disintegrating or canting by needles or fingers which are displaced together with the pushing bar. The needles or fingers are displaced always through the plug, in the boundary portion thereof, as it can be deduced from the following documents : NL 8902261 or EP 0 323 674.

A drawback of this arrangement of the needles or fingers according to these patents or patent applications has to be seen in the fact that these parts are displaced through the humid seedling or cutting soil which causes rust phenomenon, whilst pushing needles or fingers in the soil full of roots damages both the plug and the root system.

A further drawback can be seen in the fact that a certain adhesion can be observed between the soil plug and the needles or fingers, which can also cause problems for removing the plug.

The invention has now as object to obviate the drawbacks of the here described devices, such as i.a. described in the documents mentioned hereinabove, and to provide a method, a device and a set of several hollow bodies which permit to extract the soil plugs undamaged out of the hollow bodies described in the introduction and to make them available for further mechanical or manual treatment.

In order to enable this in conformity with the invention, use is made of a number of rods which are synchronously displaced with said ejecting pin around the hollow body, i.e. at the outside thereof, so as to catch the plug with the plant during or after having removed said plug out of the hollow body.

According to a possible embodiment and when said hollow body shows a collar around its open end, said rods are led through openings provided therein.

The device for ejecting and receiving a plug in conformity with the method according to the invention is characterised in that said rods displace each time according to a path which is situated entirely at the outside of the hollow body.

Other details and advantages of the invention will become apparent from the following description of a method, a device and a set of several hollow bodies according to the invention.

This description is only given by way of example and is in no way limitative for the invention. The reference numerals relate to the figures annexed hereto.
Figure 1 is a plan view of a first possible embodiment of the bottom sheet according to the invention.
Figure 2 is a plan view of a second possible embodiment of a bottom sheet according to the invention.
Figure 3 is a plan view of a third possible embodiment of a bottom sheet according to the invention.
Figure 4 is a cross section according to line IV-IV from Figure 1.
Figures 5, 6 and 7 relate to possible variants of the embodiments according to Figures 1, 2 and 3, respectively.

The method according to the invention is clarified by these different figures.

According to the spirit of the invention, use is always made of a plastic foil which is deep-drawn in a usual manner and according to known techniques. The hollow bodies can also be produced by an injection moulding process. It is clear that the invention also extends to the application field wherein separate hollow bodies would be treated in the form of flowerpots.

When cultivating seedlings or cuttings on an industrial scale, use is however made more and more of sheet shaped structures which are deep-drawn or deformed by making use of the techniques mentioned hereinabove so that a very large number of hollow bodies are formed.

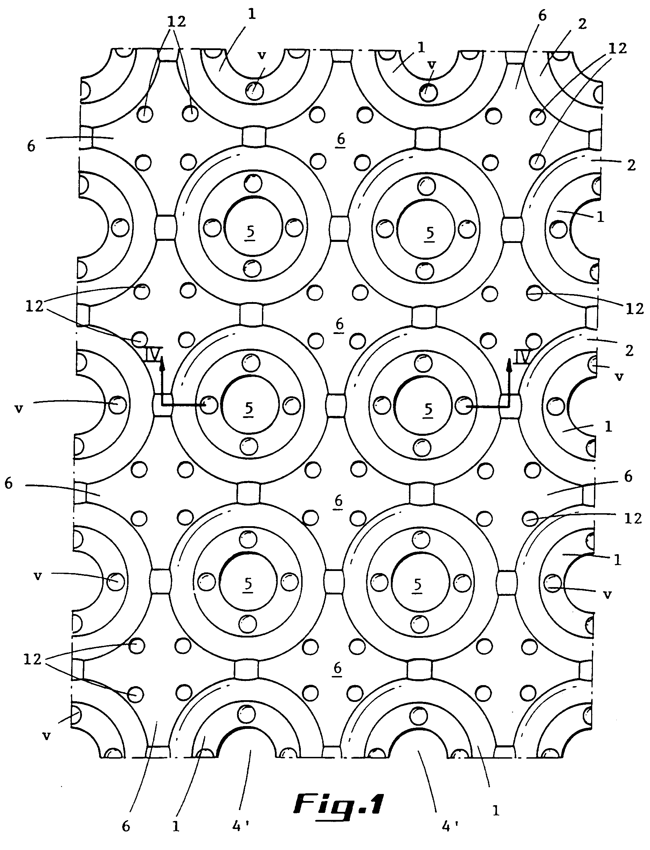

In the Figures 1, 2 and 3, the bottom material of the hollow bodies is indicated with reference numeral 1, whilst the different hollow bodies are referred to with the references 2, 3, and 4, respectively.

The bottom material forms thus the respective bottoms of the hollow bodies 2 - 4 shown here in plan view.

In the middle of each of the bottoms of the hollow bodies, there is a central opening 5. The shape and possibly the number of these central openings is determined by the irrigation problematic of the plants cultivated in these hollow bodies. This aspect of the problem does not belong here to the invention. It is to be noted that in the embodiment according to Figures 1 and 4 a number of circular feet (v) are provided in the bottom material 1. These feet (v) also do not pertain to the invention.

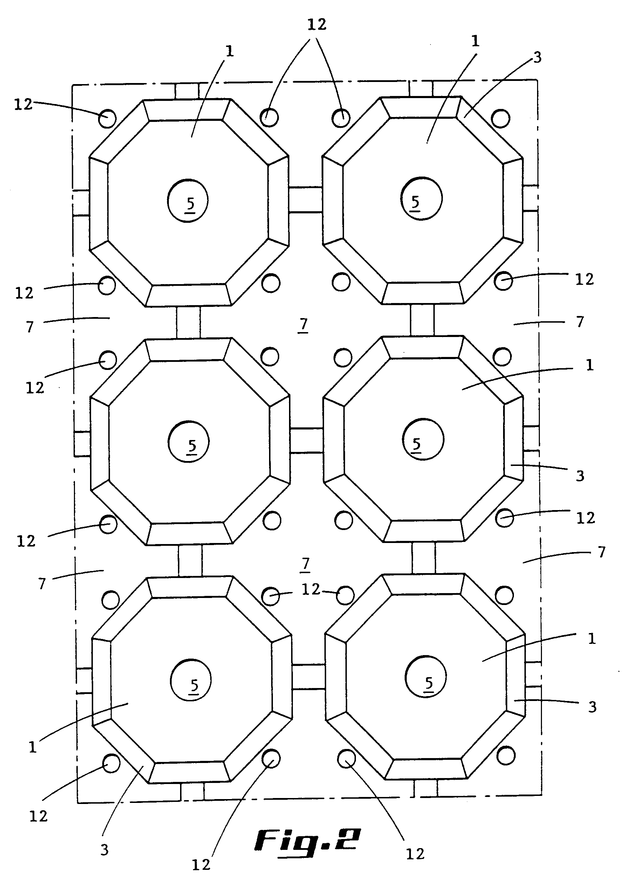

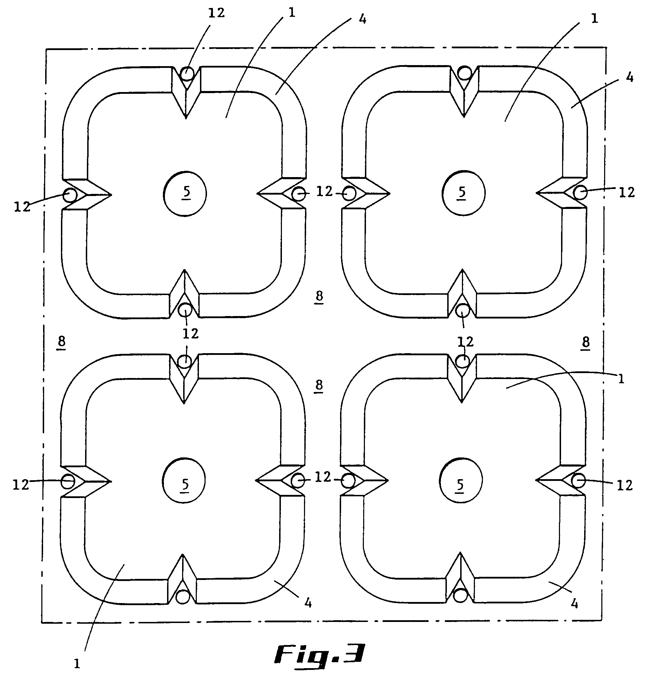

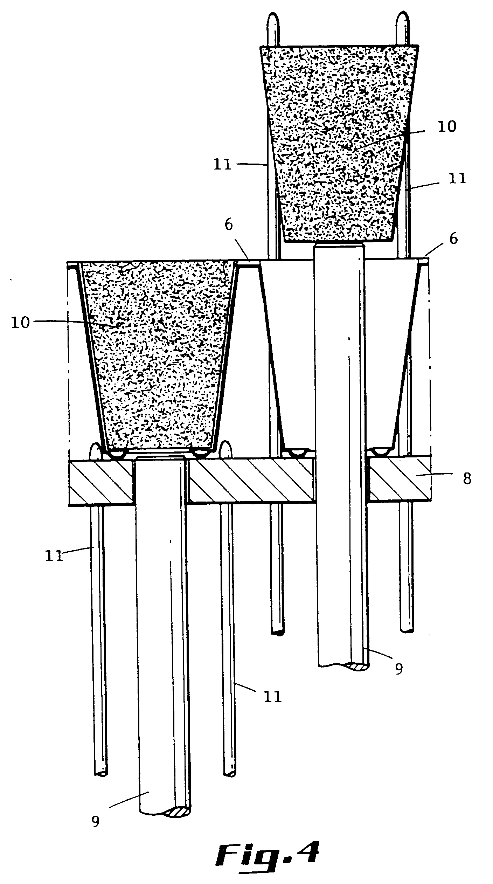

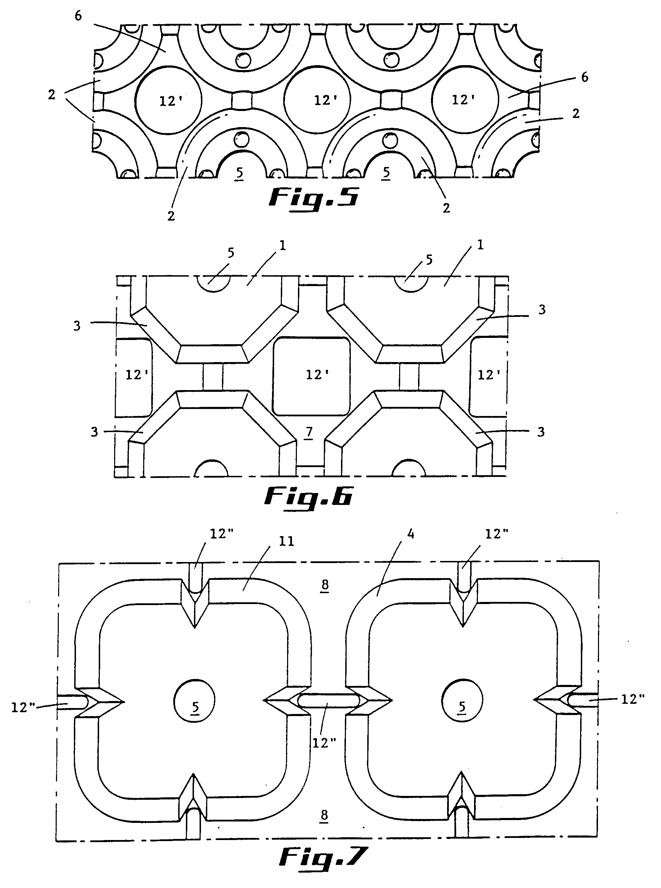

In the different figures, the synthetic material connecting the plurality of hollow bodies 2 - 4 with one another after being deep-drawn, is clarified with reference numerals. This material connects the different hollow bodies 2 - 4 at the top and is indicated in Figure 1 by reference numeral 6, in Figure 2 by reference numeral 7, in Figure 3 by reference numeral 8. Also in Figure 4 this material forming an actual connecting edge between the different hollow bodies 2 is indicated by reference 6. By means of i.a. this Figure, the method according to the invention is clarified. The method is indeed characterised by the technique described herein by way of example.

The hollow bodies, by which the actual flowerpots are meant, rest onto a supporting plate 8 through which an ejecting pin 9 can be displaced vertically for each hollow body. The soil plugs 10 pushed upwardly out of the respective hollow bodies are caught between four rods 11 passing through openings 12 disposed at the outside of the hollow bodies. For each hollow body, four openings 12 are provided but use could each time also be made of a bigger opening 12' (Figures 5 and 6) or 12'' (Figure 7) through which four rods 11, respectively two rods 11 can then be displaced. In certain cases, three of such rods could be sufficient.

Characterising for the method according to the invention is the fact that these rods 11 are always located at the outside of the hollow bodies. In this way, the rods 11 are thus prevented from being pressed through the cultivated material.

Preferably, openings are provided in the material 6 connecting the different hollow bodies 2 - 4 at the top and forming as it were a collar around each hollow body, through which the rods 11 are led during the upward displacement of the ejecting pins 9.

Although the hollow bodies according to the figures show different cross sections, the openings 12, 12' and 12'' are always situated at the outside. The soil plugs 10 are therefore always caught between the four rods 11. These rods do not pass through the soil plugs and therefore do not disturb neither the roots, nor the structure of the soil plugs. The rods 11 do not penetrate into the humid material of the soil plugs 10 and remain therefore clean or are not going to rust in case they do not consist of stainless steel.

In case the material 6 - 8 forming a collar around each hollow body and connecting them mutually is thin enough, the rods 11 could then, still in conformity with the method according to the invention, be pushed through this material. This could be done by providing the rods 11 with a heatable head.

The method according to the invention is thus distinguished from the known techniques to which reference is made in the introduction by the fact that for each embodiment of the hollow bodies or flowerpots the rods 11 are always displaced at the outside thereof.

The invention is not limited to the embodiment described herein by way of example and a lot of modifications could be applied thereto, provided they fall within the scope of the claims annexed hereto.

## Claims

1. A method for extracting a plug (10), having a plant cultivated therein, out of a hollow body (4), which hollow body (4) shows an open end and at the other end an opening (5) through which an ejecting pin (9) can push said plug (10) out of the respective hollow bodies, characterized in that use is made of a number of rods (11) which are synchronously displaced with said ejecting pin (9) around each hollow body (4), i.e. at the outside thereof, so as to catch the plug (10) with the plant during or after having removed said plug (10) from the hollow body (1, 2, 3).

2. A method according to claim 1, characterized in that, when said hollow bodies (4) show a collar around their open end, said rods (11) are led through openings (12, 12', 12'') provided therein.

3. A method according to claim 1, characterised in that, when said hollow bodies (4) show a collar around their open end, said rods (11) are pressed through said collar.

4. A device for extracting plugs in conformity with the method according to any one of the claims 1 to 3 from hollow bodies with an open end and at the other end an opening (4) through which an ejecting pin (9) can push out said plug (10), characterised in that said rods (11) displace each time according to a path situated entirely at the outside of the hollow bodies.

5. A set of several hollow bodies for cultivating plants in plugs and extracting said plugs out of these hollow bodies by means of a device according to claim 4 in conformity with the method according to any one of the claims 1 to 3, characterized in that at least one opening (12) is provided between each of said hollow bodies (1, 2, 3) for the passage of rods displacing synchronously with said ejecting pin.

6. A set of several hollow bodies according to claim 5, characterized in that four openings 12 are provided for each hollow body arranged at the outside thereof.

7. A set of several hollow bodies according to claim 5, characterized in that a common opening (12' respectively 12'') is provided for each hollow body arranged between said hollow bodies in such a manner that four, respectively two, rods (11) can be displaced through these openings.

8. A set of several hollow bodies for cultivating plants in plugs and extracting said plugs out of these hollow bodies by means of a device according to claim 4 in conformity with the method according to any one of the claims 1 to 3, characterized in that the thickness of the material of which said set is made, is chosen in such a manner that said rods (11) can be pushed through this material.

## Patentansprüche

1. Verfahren zum Herausziehen eines Ballens (10) mit einer darin gezogenen Pflanze aus einem Behälter (4), dessen eine Stirnseite offen ist und dessen andere Stirnseite ein Loch (5) hat, durch das ein Auswurfstift (9) den Ballen (10) aus dem entsprechenden Behälter drücken kann, dadurch gekennzeichnet, daß mehrere Stäbe (11) verwendet werden, die gleichzeitig mit dem Auswurfstift (9) um jeden Behälter (4) herum, z.B. an dessen Außenseite, angeordnet werden, um den Ballen (10) mit der Pflanze zu ergreifen, während oder nachdem der Ballen (10) aus dem Behälter (1, 2, 3) entnommen wird.

2. Verfahren nach Anspruch 1, dadurch gekennzeichnet, daß bei Behältern (4) mit einem Kragen um ihre Öffnung die Stäbe (11) durch darin angeordnete Löcher (12, 12', 12'') geführt werden.

3. Verfahren nach Anspruch 1, dadurch gekennzeichnet, daß bei Behältern (4) mit einem Kragen um ihre Öffnung herum die Stäbe (11) durch den Kragen gedrückt werden.

4. Vorrichtung zum Herausziehen von Ballen entsprechend dem Verfahren eines der Ansprüche 1 bis 3 aus Behältern mit einer Öffnung an einer Stirnseite und einem gegenüberliegenden Loch (4), durch das ein Auswurfstift (9) den Ballen (10) herausdrücken kann, dadurch gekennzeichnet, daß die Stäbe (11) jedesmal entsprechend einer vollständig an der Außenseite der Behälter gelegenen Bahn angeordnet sind.

5. Behältersatz zum Ziehen von Pflanzen in Ballen und zum Herausziehen der Ballen aus diesen Behältern mittels einer Vorrichtung nach Anspruch 4 mit einem Verfahren nach einem der Ansprüche 1 bis 3, dadurch gekennzeichnet, daß mindestens ein Loch (12) zwischen jedem der Behälter (1, 2, 3) vorgesehen ist, um die Durchführung von Stäben zu ermöglichen, die synchron mit dem Auswurfstift bewegt werden.

6. Behältersatz nach Anspruch 5, dadurch gekennzeichnet, daß vier Öffnungen (12) für jeden Hohlkörper vorgesehen sind, die an dessen Außenseite vorgesehen sind.

7. Behältersatz nach Anspruch 5, dadurch gekennzeichnet, daß einem gemeinsame Öffnung (12' bzw. 12'') für jeden Behälter vorgesehen ist, die zwischen den Behältern so angeordnet ist, daß vier bzw. zwei Stäbe (11) durch diese Öffnungen verschoben werden können.

8. Behältersatz zum Ziehen von Pflanzen in Ballen und zum Herausziehen der Ballen aus diesen Behältern mittels einer Vorrichtung nach Anspruch 4 gemäß einem Verfahren nach einem der Ansprüche 1 bis 3, dadurch gekennzeichnet, daß die Dicke des Materials aus dem der Satz hergestellt ist, so gewählt wird, daß die Stäbe (11) durch das Material durchgestoßen werden können.

## Revendications

1. Un procédé pour l'extraction d'une motte (10), dans laquelle est cultivée une plante, hors d'un corps creux (4), corps creux (4) qui présente une extrémité ouverte et, à l'autre extrémité, une ouverture (5) à travers laquelle un doigt d'éjection (9) peut pousser ladite motte (10) hors des corps creux respectifs, caractérisé en ce qu'on utilise un certain nombre de tiges (11) qui sont déplacées de manière synchrone avec ledit doigt d'éjection (9) autour de chaque corps creux (4), c'est-à-dire à son extérieur, de manière à attraper la motte (10) avec la plante au moment du retrait de ladite motte (10) du corps (1, 2, 3) ou après ce retrait.

2. Un procédé selon la revendication 1, caractérisé en ce que, lorsque lesdits corps creux (4) présentent une bride autour de leur extrémité ouverte, lesdites tiges (11) sont conduites à travers des ouvertures (12, 12', 12'') prévues à l'intérieur.

3. Un procédé selon la revendication 1, caractérisé en ce que, lorsque lesdits corps creux (4) présentent une bride autour de leur extrémité ouverte, lesdites tiges (11) sont pressées à travers ladite bride.

4. Un dispositif pour l'extraction de mottes, conformément au procédé selon une quelconque des revendications 1 à 3, hors de corps creux présentant une extrémité ouverte et, à l'autre extrémité, une ouverture (4) à travers laquelle un doigt d'éjection (9) peut faire sortir ladite motte (10) en la poussant, caractérisé en ce que lesdites tiges (11) se déplacent à chaque fois selon un trajet situé entièrement à l'extérieur des corps creux.

5. Un ensemble de plusieurs corps creux pour la culture de plantes en mottes et l'extraction desdites mottes hors de ces corps creux au moyen d'un dispositif selon la revendication 4 conformément au procédé selon une quelconque des revendications 1 à 3, caractérisé en ce qu'au moins une ouverture (12) est prévue entre chacun desdits corps creux (1, 2, 3) pour le passage de tiges se déplaçant de manière synchrone avec ledit doigt d'éjection.

6. Un ensemble de plusieurs corps creux selon la revendication 5, caractérisé en ce que quatre ouvertures (11) sont prévues pour chaque corps creux disposé à son extérieur.

7. Un ensemble de plusieurs corps creux selon la revendication 5, caractérisé en ce qu'une ouverture commune (12' respectivement 12'') est prévue pour chaque corps creux, en étant disposée entre lesdits corps creux de telle manière que quatre, respectivement, deux tiges (11) peuvent être déplacées à travers ces ouvertures.

8. Un ensemble de plusieurs corps creux pour la culture de plantes en mottes et l'extraction lesdites mottes hors de ces corps creux au moyen d'un dispositif selon la revendication 4 conformément au procédé selon une quelconque des revendications 1 à 3, caractérisé en ce que l'épaisseur de la matière dont est constitué ledit ensemble est choisie de telle manière que lesdites tiges (11) peuvent être poussées à travers cette matière.
